Europäisches Patentamt

**European Patent Office**

Office européen des brevets

(11) Publication number : **0 480 698 A2**

# EUROPEAN PATENT APPLICATION

(21) Application number : **91309259.9**

(22) Date of filing : **09.10.91**

(51) Int. Cl.⁵ : **C08L 23/12**, // (C08L23/12, 23:16, 53:02), (C08L23/12, 23:16, 51:04)

(30) Priority : **09.10.90 AU 2715/90**

(43) Date of publication of application :
**15.04.92 Bulletin 92/16**

(84) Designated Contracting States :
**AT BE CH DE DK ES FR GB GR IT LI LU NL SE**

(71) Applicant : **ICI AUSTRALIA OPERATIONS PROPRIETARY LIMITED**
**1 Nicholson Street**
**Melbourne Victoria 3001 (AU)**

(72) Inventor : **Bauer, Tania M.**
**64 Sanders Avenue, West Sunshine 3020**
**Victoria (AU)**
Inventor : **Moustakas, Nekta**
**3 Field Street, Moonee Ponds 3039**
**Victoria (AU)**
Inventor : **o'Leary, John J.**
**1 Whalley Street, Northcote 3070**
**Victoria (AU)**

(74) Representative : **Roberts, Jonathan Winstanley**
**Imperial Chemical Industries PLC Legal Department;Patents Bessemer Road PO Box 6 Welwyn Garden City Hertfordshire AL7 1HD (GB)**

(54) **Propylene polymers.**

(57)   Blends of a) defined isotactic polypropylene ; b) defined ethylene C3 to 10 alpha-olefin copolymers or terpolymers ; and c) defined block styrenic/conjugated diolefin copolymers grafted with carboxylic or anhydride functionality, combine good resistance to marking on impact (stress whitening or bruising) with toughness properties comparable with so-called medium impact polypropylene.

EP 0 480 698 A2

This invention relates to propylene polymers and more particularly to impact-resistant polypropylene.

Impact-resistant polypropylene, which is typically a blend of isotactic polypropylene with rubbery modifiers such as ethylene-propylene rubber (EPR) and ethylene-propylene terpolymer (EPT OR EPDM) has found a wide variety of uses, for example, battery cases, household appliances, luggage, furniture and various automotive applications. The rubbery modifiers overcome the low temperature brittleness and lack of impact resistance of isotactic polypropylene.

Such blends are not, however, without their problems. They are often subject to stress whitening or "bruising" on impact, that is, an impact on an article of an impact-resistant polypropylene of this type leaves a permanent white discolouration. There is often a marked reduction in the tensile strength of the isotactic polypropylene as a consequence of the addition of the rubbery modifiers.

We have now found a polypropylene polymer composition which provides improved impact resistance and alleviates some of the abovementioned problems. Accordingly we therefore provided a propylene polymer composition comprising a blend of

1. isotactic polypropylene;
2. at least one copolymer or terpolymer of ethylene and at least one α-olefin; and
3. at least one block copolymer of at least one styrenic monomer and at least one conjugated diolefin which has been grafted with carboxylic acid or anhydride functionality;

further characterised in that

(a) the isotactic polypropylene has a melt flow index, ASTM D1238 CONDITION L of 0.1-40g/10 min and a xylene-soluble content of from 2-6% w/w;

(b) the α-olefins for use in the copolymer or terpolymer have from 3-10 carbon atoms, and the copolymers or terpolymers have the following characteristics;

(i) a density of from 860-930 kg/m$^3$
(ii) crystallinity of from 10-50%
(iii) a melt flow index ASTM D 1238 CONDITION E of from 0.1-40 g/10 min; and
(iv) an α-olefin content of up to 70 mole%; and

(c) the block copolymer is selected from styrene/ethylene/butylene/styrene (SEBS) block copolymers, styrene/ethylene/propylene/styrene (SEPS) block copolymers and radial SEB or SEP block copolymers, wherein the block copolymer contains from 20-45 mole percent of styrenic monomer, is grafted with from 0.1-6.0 mole percent of a carboxylic acid or a carboxylic acid anhydride and wherein a 20% (weight) solution of said block copolymer in toluene has a viscosity of 3,000 - 11,000 cps at 25°C.

The isotactic polypropylene for use in this invention can be any such material known to the art which complies with the parameters mentioned hereinabove. Commercially available isotactic polypropylene typically comprises approximately 3% atactic polypropylene. It is preferred that the amount of atactic polypropylene is less than 8%.

Preferably the melt flow index ASTM D1238 CONDITION L of the isotactic polypropylene is in the range of 0.4 to 20 g/10 min and more preferably in the range of 1.5 to 8 g/10 min.

The polymer of ethylene and α-olefin has a density in the range from 860 to 930 kg/m$^3$, preferably 890 to 920 kg/m$^3$. The melt flow index ASTM D1238 CONDITION E of the polymer of ethylene and α-olefin is in the range of from 0.1 to 40 g/10 min, preferably in the range of from 0.3 to 4 g/10 min.

The polymer of ethylene and α-olefin comprises up to 70 mole percent of α-olefin. The crystalinity of the polymer of ethylene and α-olefin is related to the α-olefin content. Preferably the α-olefin content is in the range of from 2 to 30 mole percent.

The α-olefin is preferably selected from propene, butene, hexene, octene and 1-methylpentene.

The styrene/ethylene/butylene/styrene and styrene/ethylene/propylene/styrene block copolymers (hereinafter SEBS and SEPS respectively) may be selected from any such polymers known to the art which comply with the parameters mentioned herein.

By "radial SEB or SEP block copolymers" are meant copolymers of the general formulae (SEB)nX and (SEP)nX wherein X is a multivalent cation or a multifunctional moiety and n is the valency or functionality of X. Typically X is silicon or organosilane.

The SEBS and SEPS copolymers may be prepared by the sequential anionic polymerisation of the monomers using known initiators such as alkyl lithium initiators.

The SEB and SEP copolymers for the radial block copolymers may again be prepared by sequential anionic polymerisation using known initiators. The polymers are then coupled together by using multifunctional coupling agents known to the art, for example polychlorosilanes.

The styrenic monomers for use in this invention are selected from styrene itself and homologues such as α-methyl styrene and the mixed isomers sold commercially as "vinyl toluene". It is preferred that the copolymers contain from 25-35 mole percent of styrenic monomer.

The block copolymers for use in this invention are grafted with from 1-6 mole percent of a carboxylic acid or acid anhydride. The preferred acid is acrylic acid and the preferred acid anhydride is maleic anhydride.

It is preferred that block copolymers for use in the present invention are hydrogenated. Hydrogenated block copolymers provide improved weatherability characteristics in the polypropylene composition. The olefins may be hydrogenated by known means.

The propylene polymer compositions of this invention may be prepared by conventional melt blending and extruding technology, for example, by using single or multiscrew extruders, continuous twin rotor mixers and batch twin rotor mixers.

As is well known in the art, the ethylene/$\alpha$-olefin co/terpolymer may be produced in situ with the isotactic polypropylene. This may be done by conventional solution, slurry or gas phase polymerisation technology.

In addition to the essential components, the compositions of the invention may also contain ingredients well known to the art to be useful in such compositions, these being included in art-recognised quantities. Such ingredients include antioxidants, UV stabilisers, nucleating agents, fillers and pigments.

The invention is further described with reference to the following Example.

Example

The compositions tested were as follows:

Composition No. 1

"Propathene" (trade mark) GWM 101/75 (ex ICI Australia) - a conventional impact-resistant polypropylene with a melt flow index ASTM D1238 CONDITION L (MFI) of 4.

Composition No. 2

A blend of the following materials:

80% (wt)  "Propathene" GWE 39 - a gas-phase polymerised propylene homopolymer of MFI ASTM D1238 CONDITION L 4.

15%  TUF 2060 (ex Nippon Unicar) - a gas-phase hexene linear low density polyethylene of MFI ASTM D1238 CONDITION E 2.5.

5%  "Kraton" (trade mark) G1650M (ex Shell) - a SEBS block copolymer

Composition No. 3

A blend of the following materials:

80%  Propathene" GWE 39

15%  TUF 2060

5%  "Kraton" FG1901X - a SEBS copolymer grafted with 2% maleic anhydride

The blends were prepared by melt blending, using a 24 L/D single screw extruder with a conventional polyolefines screw.

These compositions were then tested according to the following methods:

Stress Whitening test

This test was carried out on a Davenport impact tester using a 12.75 nm hemispherical impactor, a weight of 400 g and a drop height of 200 mm. Testing was carried out on plaques of 3 mm thickness freely supported in a support of 50.8 mm inner diameter and 63.5 outer diameter. Each plaque was subjected to 10 impacts n the same spot. The diameter and intensity of whiteness of the bruise were measured and the whiteness was rated on a scale from 0 (no visible mark) to 5 (totally opaque bruise).

Flexural Modulus test

This was carried out according to ASTM Test Method D790 Method I.

Instrumented Impact Break Energy

This was measured on an ICI Instrumented Impact Tester. A 12.7 hemispherical impactor was driven into

EP 0 480 698 A2

a 3 mm thick plaque supported on a 50.8 mm inner diameter 63.5 mm outer diameter anvil, sufficient energy being applied to break the plaque.

<u>Notched Izod impact test</u>

This was carried out according to ASTM Test Method D256 Method A
The results were as follows:

```
Composition No.:            1      2      3

Stress Whitening:
diameter (mm)              20      7      6
intensity                   5      3      2

Flexural
Modulus (GPa):            1.4    1.3    1.3

Instrumented Impact
Break Energy (J):        34.2    2.2   33.9

Notched Izod
Impact (J/M):
at 23°C                   110     78    144
at  0°C                    70     47     89
```

It can be seen that the composition according to the invention (No. 3) performs outstandingly well.

**Claims**

1.  A polypropylene polymer composition characterised in that the composition comprises blend of
    1. isotactic polypropylene;
    2. at least one copolymer or terpolymer of ethylene and at least one $\alpha$-olefin; and
    3. at least one block copolymer of at least one styrenic monomer and at least one conjugated diolefin which has been grafted with carboxylic acid or anhydride functionality;
    further characterised in that
    (a) the isotactic polypropylene has a melt flow index, ASTM D1238 CONDITION L of 0.1-40g/10 min and a xylene-soluble content of from 2-6% w/w;
    (b) the $\alpha$-olefins for use in the copolymer or terpolymer have from 3-10 carbon atoms, and the copolymers or terpolymers have the following characteristics;
        (i) a density of from 860-930 kg/m$^3$
        (ii) crystallinity of from 10-50%
        (iii) a melt flow index ASTM D 1238 CONDITION E of from 0.1-40 g/10 min; and
        (iv) an $\alpha$-olefin content of up to 70 mole%; and
    (c) the block copolymer is selected from styrene/ethylene/butylene/styrene (SEBS) block copolymers, styrene/ethylene/propylene/styrene (SEPS) block copolymers and radial SEB or SEP block copolymers, wherein the block copolymer contains from 20-45 mole percent of styrenic monomer, is grafted with from 0.1-6.0 mole percent of a carboxylic acid or a carboxylic acid anhydride and wherein a 20% (weight) solution of said block copolymer in toluene has a viscosity of 3,000 - 11,000 cps at 25°C.

2. A polypropylene polymer composition according to claim 1 wherein the isotactic polypropylene comprises less than 8% attactic polypropylene.

3. A polypropylene polymer composition according to either one of claim 1 or 2 wherein the isotactic polypropylene comprises about 3% of attactic polypropylene.

4. A polypropylene polymer composition according to any one of claims 1 to 3 inclusive wherein the melt flow index ASTM D1238 CONDITION L of the isotactic polypropylene is in the range of 0.4 to 20 g/10 min.

5. A polypropylene polymer composition according to any one of claims 1 to 4 inclusive wherein the melt flow index ASTM D1238 CONDITION L of the isotactic polypropylene is in the range of 1.5 to 8 g/10 min.

6. A polypropylene polymer composition according to any one of claims 1 to 5 wherein the polymer of ethylene and $\alpha$-olefin has a density in the range from 890 to 920 kg/m³.

7. A polypropylene polymer composition according to any one of claims 1 to 6 wherein the melt flow index ASTM D1238 CONDITION E of the polymer of ethylene 0.3 to 4 g/10 min.

8. A polypropylene polymer composition according to any one of claims 1 to 7 wherein the polymer of ethylene and $\alpha$-olefin has an $\alpha$-olefin content in the range of from 2 to 30 mole percent.

9. A polypropylene polymer composition according to any one of claims 1 to 8 wherein the $\alpha$-olefin is preferably selected from the group consisting of 15 propene, butene, hexene, octene and 1-methylpentene.

10. A polypropylene polymer composition according to any one of claims 1 to 9 wherein the block copolymers are grafted with either acrylic acid or maleic anhydride.

11. A polypropylene polymer composition according to any one of claims 1 to 10 wherein the block copolymers are hydrogenated.

12. A polypropylene polymer composition substantially as hereinabove defined with reference to the example.

5